# EUROPÄISCHE PATENTSCHRIFT

(11) **EP 3 221 681 B1**
(45) Veröffentlichungstag und Bekanntmachung des Hinweises auf die Patenterteilung: **05.12.2018**
(21) Anmeldenummer: 15781355.1
(22) Anmeldetag: 19.10.2015
(51) Int. Cl.: B60G 17/019, G01L 5/00, B60G 7/00

(54) **MECHANISCHES BAUTEIL MIT EINEM KRAFTSENSOR**
MECHANICAL COMPONENT HAVING A FORCE SENSOR
PIÈCE MÉCANIQUE COMPORTANT UN CAPTEUR DE FORCE

(30) Priorität: 20.11.2014 DE 102014223654
(43) Veröffentlichungstag der Anmeldung: 27.09.2017
(73) Patentinhaber: ZF Friedrichshafen AG, 88046 Friedrichshafen (DE)
(72) Erfinder: HASKAMP, Klaus, 49413 Dinklage (DE); KLANK, Michael, 49084 Osnabrück (DE); STRATMANN, Julian, 49324 Melle (DE); VORTMEYER, Jens, 32361 Preussisch Oldendorf (DE); HARTMANN, Andreas, 49685 Höltinghausen (DE); SCHWINGE, Christoph, 49624 Loeningen (DE)
(86) Internationale Anmeldenummer: PCT/EP2015/074085
(87) Internationale Veröffentlichungsnummer: WO 2016/078844

(56) Entgegenhaltungen:
- EP-A1- 2 524 827
- EP-A1- 2 589 503
- DE-A1-102011 089 605
- DE-A1-102012 005 614
- GB-A- 2 246 864
- US-B1- 6 422 089

## Beschreibung

Die Erfindung betrifft ein mechanisches Bauteil für ein Fahrzeug, aufweisend einen Messbereich mit einer Oberfläche und mindestens einen dem Messbereich zugeordneten Kraftsensor zur Erfassung einer das Bauteil beanspruchenden Kraft.

In der älteren Anmeldung der Anmelderin mit dem Aktenzeichen DE 10 2013 213 672.2 ist ein mechanisches Bauteil mit einem Kraftsensor offenbart, wobei das mechanische Bauteil in einer bevorzugten Ausführungsform als Pendelstütze und der Kraftsensor als biegeelastisches Verformungselement ausgebildet ist, welcher innerhalb eines Messbereiches formschlüssig mit der Pendelstütze verbunden ist. Das Verformungselement wirkt dabei als Verstärker einer mechanischen Beanspruchung in der stabförmig ausgebildeten Pendelstütze, in welcher in erster Linie Zug- und Druckspannungen auftreten. Die aus einer Druck- oder Zugspannung resultierende Stauchung oder Dehnung der Pendelstütze wird auf das bogenförmig ausgebildete Verformungselement übertragen und bewirkt eine Biegung, wodurch die Dehnung oder Stauchung verstärkt wird. Die mechanische Änderung des Verformungselements, welches aus einem magnetischen Material hergestellt ist, geht mit einer Änderung des Magnetfeldes einher, was messbar und in elektrische Signale umwandelbar ist. Die Verformung des Verformungselements wird durch eine geeignete Sensorik, vorzugsweise unter Durchführung einer Magnetfeldmessung erfasst.

Durch die DE 10 2011 117 519 A1 wurde eine Anhängerkupplung mit einem Kraftsensor bekannt, wobei der Kraftsensor vorzugsweise als Dehnungsmessstreifen ausgebildet und auf der Oberfläche des Kupplungshakens angeordnet ist.

Aus der DE 10 2012 005 614 A1 ist beispielsweise eine Schraube oder ein Bolzen als Verbindungselement bekannt, bei dem in einen Hohlraum ein Kraftsensor angeordnet ist. Der Hohlraum kann mittels einer separaten Dichtkugel oder einer in einen Kabelkanal einzubringenden Zugentlastung abgedichtet werden.

Der US 6,422,089 B1 ist ein Sensor innerhalb eines Trägerrohrs zu entnehmen, wobei das Trägerrohr mit einem Trägerelement mittels Bolzen, Verschweißen oder anderen geeigneten Befestigungsmitteln befestigbar ist.

Aus der GB 2 246 864 A ist eine Sensoranordnung bekannt, bei der ein Sensor innerhalb eines rohrförmigen Stiftes angeordnet ist, wobei der rohrförmige Stift einerseits mittels einer einschraubbaren Kappe und andererseits mittels eines einklebbaren Elementes verschlossen ist.

Es ist eine Aufgabe der vorliegenden Erfindung, weitere Potenziale der Kraftmessung an mechanischen Bauteilen auszuschöpfen.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass ein mechanisches Bauteil einen im Messbereich angeordneten Hohlkörper mit einem Hohlraum aufweist, in welchem der Kraftsensor positionierbar ist. Damit wird der Vorteil erreicht, dass der empfindliche Kraftsensor gegen schädliche äußere Einflüsse, insbesondere Steinschlag sowie korrosive Medien geschützt ist, da er in einem hermetisch nach außen abgeschlossenen Hohlraum angeordnet und befestigt ist. Darüber hinaus wird zusätzlicher Bauraum für die Unterbringung des Sensors eingespart. Der Hohlkörper ist integrativer Bestandteil des Bauteils und wird somit in gleicher Weise wie das übrige Bauteil beansprucht, d. h. der Hohlkörper liegt im Kraftfluss der das Bauteil beanspruchenden Kraft. Das Bauteil selbst erfährt durch die Anordnung und Integration des Hohlkörpers keine funktionellen Beeinträchtigungen.

Nach einer vorteilhaften Ausführungsform ist das Bauteil als Lenker oder Stab- oder Pendelstütze oder als Kugelgelenk eines Fahrwerks ausgebildet, wobei das Bauteil auf Zug oder Druck beansprucht wird und mit einem Stabilisator gelenkig verbunden ist. Die geschützte Anordnung des Kraftsensors innerhalb der Pendelstütze bietet bei dieser Anwendung besondere Vorteile, und zwar wegen Steinschlag und Korrosion. Die Messung der Stützkraft in der Pendelstütze wird als Ausgangsgröße bei einer aktiven Wankstabilisierung des Fahrzeuges verwendet.

Nach einer weiteren bevorzugten Ausführungsform ist das Bauteil als gelenkig mit der Pendelstütze verbundener Kugelzapfen ausgebildet. Im Unterschied zur Pendelstütze wird der Kugelzapfen, insbesondere sein Schaft auf Biegung beansprucht, d. h. es treten Biegespannungen im Kugelzapfen auf, welche betragsmäßig höher als die Zug- oder Druckspannungen in der Pendelstütze sind. Insofern ergeben sich bei einer Anordnung des Kraftsensors in einem Hohlraum des Kugelzapfens ein Verstärkungseffekt und damit ein genaueres Messergebnis. Die Pendelstütze bildet wenigstens teilweise das Gehäuse für den Kugelzapfen aus, der darin dreh- und/oder schwenkbeweglich aufgenommen sein kann.

Nach einer weiteren bevorzugten Ausführungsform kann das Bauteil als Anhängerkupplung eines Fahrzeuges ausgebildet sein, d. h. als Kupplungshaken mit einem Kugelkopf. Auch hier erweist sich die geschützte Anordnung des Kraftsensors innerhalb eines Hohlkörpers, welcher Teil des Kupplungshakens ist, als besonders vorteilhaft.

Nach einer weiteren bevorzugten Ausführungsform ist der Hohlkörper als Hohlzylinder oder Hohlkugel mit einer inneren Oberfläche ausgebildet. Auf der inneren Oberfläche kann der Kraftsensor - oder auch mehrere Kraftsensoren - befestigt werden, und zwar in der Weise, dass sich die Verformungen der inneren Oberfläche unmittelbar auf den oder die Kraftsensoren übertragen.

Erfindungsgemäß weist der Hohlkörper zumindest eine Schnittstelle mit dem Bauteil, respektive der Pendelstütze oder dem Kugelzapfen auf. Die Schnittstelle bildet am Hohlkörper eine Öffnung und bietet damit die Möglichkeit für eine Montage des Kraftsensors und etwaiger Zubehörteile wie Kontaktierungen, Elektronik und anderes. Nachdem der Kraftsensor im Hohlraum platziert und befestigt ist, werden der Hohlkörper und das Bauteil an der Schnittstelle miteinander gefügt.

Erfindungsgemäß ist der Hohlkörper im Bereich der Schnittstelle stoffschlüssig, insbesondere durch Verschweißen mit dem Bauteil verbunden. Damit wird eine feste und dichte Verbindung zwischen Hohlkörper und Bauteil erreicht, d. h. ein hermetischer Abschluss des Kraftsensors, der Schutz vor äußeren Einflüssen, wie z. B. Korrosion bietet.

Nach einer weiteren bevorzugten Ausführungsform weist der Hohlkörper einen geschlossenen Querschnitt, insbesondere einen Ringquerschnitt auf, welcher im Kraftfluss der das Bauteil beanspruchenden Kraft (Beanspruchungskraft) angeordnet ist. Die Querschnittsfläche ist maßgebend für die resultierende Spannung und Verformung.

Nach einer weiteren bevorzugten Ausführungsform ist der Kraftsensor im Bereich der inneren Oberfläche angeordnet. Dabei ist der Kraftsensor - je nach Bauart - derart mit der Oberfläche verbunden, dass sich die im Zuge der Beanspruchung einstellenden Verformungen direkt auf den Kraftsensor übertragen.

Nach einer weiteren bevorzugten Ausführungsform kann der Kraftsensor als Dehnungsmessstreifen, insbesondere als optischer oder aufgespritzter oder aufgedampfter Dehnungsmessstreifen, ausgebildet sein. Vorzugsweise ist der Dehnungsmessstreifen mittels Kathodenzerstäubung (Sputtern) aufgebracht. Damit kann ein standardisierter Kraftsensor Verwendung finden. Möglich sind jedoch auch andere Kraftsensoren, z. B. Carbon Nanotubes bzw. Kohlenstoff-Nanoröhrchen, welche als sensitives Element, aufzubringen auf der inneren Oberfläche des Hohlkörpers, Verwendung finden. Eine ausführliche Beschreibung von Carbon Nanotubes als Kraftsensor findet sich in der zeitgleich eingereichten Anmeldung der Anmelderin mit dem internen Aktenzeichen: ZF 006408. Im Übrigen kann die Messung der Kraft induktiv, resistiv, optisch, magnetostriktiv, kapazitiv, piezoelektrisch oder magnetoresistiv erfolgen.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: als erstes Ausführungsbeispiel der Erfindung einen innerhalb eines als Kugelzapfen ausgebildeten Bauteils angeordneten Kraftsensor und
- Fig. 2: als zweites Ausführungsbeispiel der Erfindung einen innerhalb eines als Pendelstütze ausgebildeten Bauteils angeordneten Kraftsensor.

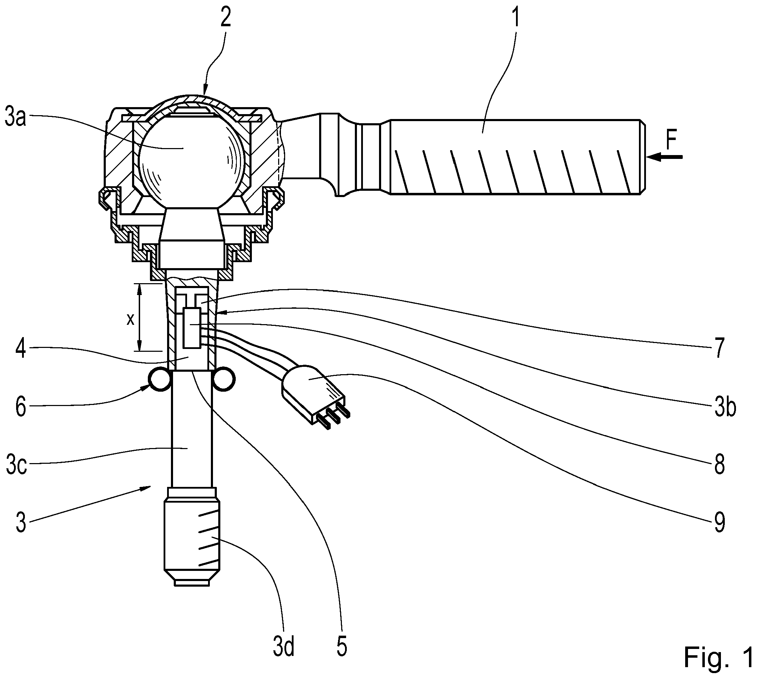

Fig. 1 zeigt als erstes Ausführungsbeispiel der Erfindung eine unvollständig dargestellte Pendelstütze 1, welche mittels eines Kugelgelenks 2 mit einem Kugelzapfen 3 verbunden ist. Die Pendelstütze 1 und der Kugelzapfen 3 können Bestandteile eines Wankstabilisierungssystems eines Fahrzeuges sein. Der Kugelzapfen 3, welcher das erste Ausführungsbeispiel des mechanischen Bauteils bildet, weist einen Kugelkopf 3a, einen ersten Schaftbereich 3b und einen zweiten Schaftbereich 3c mit einem Gewindeabschnitt 3d auf. Der erste Schaftbereich 3b ist teilweise hohl ausgebildet und weist einen etwa zylindrisch ausgebildeten Hohlraum 4 auf. Der zweite massiv ausgebildete Schaftbereich 3c ist über eine Schnittstelle 5 mit dem ersten Schaftbereich 3b stoffschlüssig verbunden, vorzugsweise durch eine Schweißnaht 6. Der Hohlraum 4 ist somit nach außen abgedichtet. Innerhalb des Hohlraumes 4, der eine innere zylindrisch ausgebildete Oberfläche aufweist, ist mindestens ein Kraftsensor 7 angeordnet, z. B. ein Dehnungsmessstreifen oder ein aus Carbon Nanotubes bestehendes Sensorelement (vgl. hierzu die zeitgleich eingereichte Anmeldung der Anmelderin mit dem internen Aktenzeichen: ZF 006408). Ferner ist in dem Hohlraum 4 ein elektronisches Bauteil 8 angeordnet, welches in Wirkverbindung mit dem mindestens einen Kraftsensor 7 steht. Das elektronische Bauteil 8 ist über einen elektrischen Anschluss 9 mit einer nicht dargestellten Stromquelle verbunden.

Der mindestens eine Kraftsensor 7 dient der Messung der Stützkraft, angedeutet durch einen Pfeil F, in der Pendelstütze 1. Die Stützkraft F wird über das Kugelgelenk 2 auf den über den Gewindeabschnitt 3d eingespannten Kugelzapfen 3 übertragen, sodass der Kugelzapfen 3, insbesondere der erste und zweite Schaftbereich 3b, 3c einer Biegebeanspruchung unterworfen sind. Die Biegespannungen stellen eine Verstärkung der in der Pendelstütze wirkenden Druck- oder Zugspannungen dar. Die aus den Biegespannungen im ersten Schaftbereich 3b resultierenden Verformungen, insbesondere an der inneren Oberfläche des Hohlraumes 4 werden über den mindestens einen Kraftsensor 7 gemessen. Das aus der Messung resultierende Signal wird der Elektronik des elektronischen Bauteils 8 zugeführt und dort ausgewertet. Aus der Biegebeanspruchung und dem gemessenen Verformungswert kann die Stützkraft in der Pendelstütze 1 berechnet werden.

Im dargestellten Ausführungsbeispiel ist der Hohlraum 4 zylindrisch und der erste Schaftbereich 3b als Hohlzylinder dargestellt. Möglich sind jedoch auch geometrische Abweichungen des Hohlraumes 4: Z. B. kann der erste Schaftbereich 3b kugel- oder tonnenförmig mit einem entsprechend vergrößerten Hohlraum 4 ausgebildet sein. Daraus ergäbe sich der Vorteil, dass mehr Raum im Inneren für die Unterbringung der Sensoren und der Elektronik gegeben wäre.

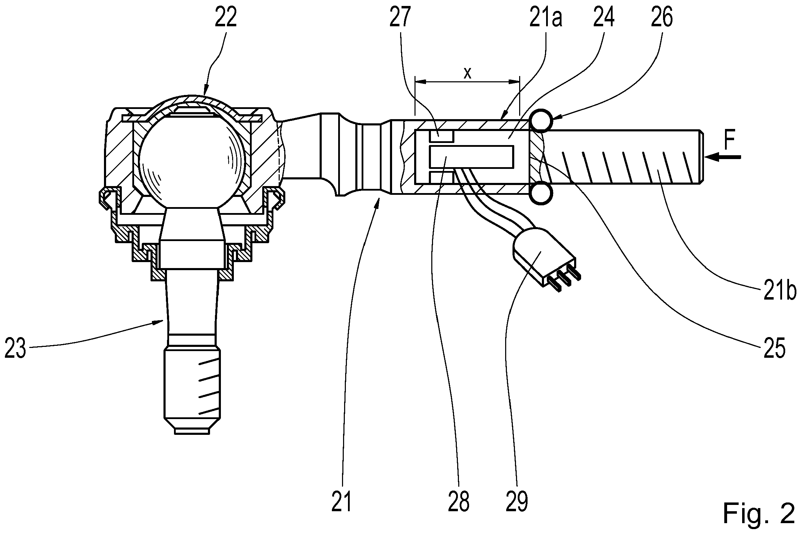

Fig. 2 zeigt als zweites Ausführungsbeispiel der Erfindung ein mechanisches Bauteil, welches als Pendelstütze 21 ausgebildet ist und über ein Kugelgelenk 22 mit einem Kugelzapfen 23 verbunden ist. Die Bezugszahlen für gleiche oder analoge Teile sind in Fig. 2 um den Betrag 20 gegenüber den Bezugzahlen in Fig. 1 erhöht. Der Unterschied gegenüber Fig. 1 besteht darin, dass der mindestens eine Kraftsensor 27 in einem Hohlraum 24 der Pendelstütze 21, welche durch die Axialkraft F belastet ist, angeordnet ist. Die Pendelstütze 21 ist durch eine Schnittstelle 25 in einen ersten hohl ausgebildeten Bereich 21a und einen zweiten massiv ausgebildeten Teil 21b geteilt. Vor dem Fügen ist der Hohlraum 24 im Bereich der Schnittstelle 25 offen und von außen zugänglich, sodass der mindestens eine Kraftsensor 27 und das elektronische Bauteil 28 sowie der elektrische Stecker 29 im Hohlraum 24 montiert und befestigt werden können. Danach werden beide Bereiche 21a, 21b an der Schnittstelle 25 gefügt und stoffschlüssig, z. B. durch eine Schweißnaht 26 fest und dicht miteinander verbunden, sodass der Hohlraum 24 nach außen abgeschlossen und abgedichtet ist. Die Axialkraft F wird über die Schweißverbindung 26 im Bereich der Schnittstelle 25 übertragen.

Der Hohlraum 24 wird durch einen Ringquerschnitt begrenzt. Dieser RingQuerschnitt wird durch die Axialkraft F belastet, sodass sich dort eine Druckspannung, verbunden mit einer elastischen Stauchung des Materials, ausbildet. Ebenso ist im Betrieb der Pendelstütze eine Zugkraft mit entsprechender Zugbeanspruchung und Dehnung möglich. Diese Verformungen werden über den mindestens einen Kraftsensor 27 erfasst.

Abweichend von der Darstellung in Fig. 1 und Fig. 2 kann die Erfindung auch an weiteren ähnlich aufgebauten Bauteilen angewendet werden, z. B. bei einer Fahrzeug-Anhängerkupplung. In diesem Falle wäre der Kupplungshaken der Anhängerkupplung teilweise als Hohlkörper auszubilden, in welchem mindestens ein Kraftsensor platziert werden könnte, um die auf den Kupplungshaken wirkenden Kräfte zu erfassen.

### Bezugszeichen

- 1: Pendelstütze
- 2: Kugelgelenk
- 3: Kugelzapfen
- 3a: Kugelkopf
- 3b: erster Schaftbereich
- 3c: zweiter Schaftbereich
- 3d: Gewindeabschnitt
- 4: Hohlraum
- 5: Schnittstelle
- 6: Schweißnaht
- 7: Kraftsensor
- 8: elektronisches Bauteil
- 9: Stecker

- 21: Pendelstütze
- 21a: erster Bereich (hohl)
- 21b: zweiter Bereich (massiv)
- 22: Kugelgelenk
- 23: Kugelzapfen
- 24: Hohlraum
- 25: Schnittstelle
- 26: Schweißnaht
- 27: Kraftsensor
- 28: elektronisches Bauteil
- 29: Stecker

- F: Stützkraft
- x: Messbereich

## Patentansprüche

1. Mechanisches Bauteil für ein Fahrzeug, insbesondere Stab- oder Pendelstütze, Lenker oder Kugelgelenk, aufweisend einen Messbereich mit einer Oberfläche und mindestens einem dem Messbereich zugeordneten Kraftsensor zur Erfassung einer das Bauteil beanspruchenden Kraft, wobei das Bauteil (3, 21) einen im Messbereich angeordneten Hohlkörper (3b, 21a) mit einem Hohlraum (4, 24) aufweist, in welchem der mindestens eine Kraftsensor (7, 27) positionierbar ist, **dadurch gekennzeichnet, dass** der Hohlkörper (3b, 21a) mindestens eine Schnittstelle (5, 25) mit einem massiven Bereich des Bauteils (3c, 21b) aufweist, wobei die Schnittstelle (5, 25) am Hohlkörper (5, 25) eine Öffnung zum Montieren des Kraftsensors (7, 27) und etwaiger Zubehörteile bildet und der Hohlkörper (3b, 21a) im Bereich der Schnittstelle (5, 25) stoffschlüssig mit dem Bauteil (3c, 21b) verbunden ist, wodurch ein hermetischer Abschluss des Kraftsensors (7,27) erreicht ist.

2. Mechanisches Bauteil nach Anspruch 1, **dadurch gekennzeichnet, dass** das Bauteil als Pendelstütze (21) eines Fahrwerks ausgebildet ist.

3. Mechanisches Bauteil nach Anspruch 1, **dadurch gekennzeichnet, dass** das Bauteil als Kugelgelenk (2) oder Kugelzapfen (3), welcher gelenkig mit einer Pendelstütze (1) verbunden ist, ausgebildet ist.

4. Mechanisches Bauteil nach Anspruch 1, **dadurch gekennzeichnet, dass** das Bauteil als Anhängerkupplung mit einem Kupplungshaken ausgebildet ist.

5. Mechanisches Bauteil nach einem der Ansprüche 1 bis 4, **dadurch gekennzeichnet, dass** der Hohlkörper (3b, 21a) als Hohlzylinder oder Hohlkugel mit einer inneren Oberfläche ausgebildet ist.

6. Mechanisches Bauteil nach einem der Ansprüche 1 bis 5, **dadurch gekennzeichnet, dass** der Hohlkörper (3b, 21a) einen geschlossenen Querschnitt aufweist, welcher im Kraftfluss der Beanspruchungskraft angeordnet ist.

7. Mechanisches Bauteil nach einem der Ansprüche 5 bis 6, **dadurch gekennzeichnet, dass** der mindestens eine Kraftsensor (7, 27) im Bereich oder auf der inneren Oberfläche des Hohlkörpers (3b, 21a) angeordnet ist.

8. Mechanisches Bauteil nach einem der Ansprüche 1 bis 7, **dadurch gekennzeichnet, dass** der mindestens eine Kraftsensor (7, 27) als Dehnungsmessstreifen oder als Sensorelement aus Carbon Nanotubes ausgebildet ist.

## Claims

1. Mechanical component for a vehicle, in particular rod or hinged support, link or ball joint, having a measuring region with a surface and at least one force sensor which is assigned to the measuring region for detecting a force which loads the component, the component (3, 21) having a hollow body (3b, 21a) which is arranged in the measuring region and has a cavity (4, 24), in which the at least one force sensor (7, 27) can be positioned, **characterized in that** the hollow body (3b, 21a) has at least one interface (5, 25) with a solid region of the component (3c, 21b), the interface (5, 25) on the hollow body (5, 25) forming an opening for mounting the force sensor (7, 27) and any accessories, and the hollow body (3b, 21a) being connected to the component (3c, 21b) in an integrally joined manner in the region of the interface (5, 25), as a result of which a hermetic seal of the force sensor (7, 27) is achieved.

2. Mechanical component according to Claim 1, **characterized in that** the component is configured as a hinged support (21) of a chassis.

3. Mechanical component according to Claim 1, **characterized in that** the component is configured as a ball joint (2) or a ball pivot (3) which is connected to a hinged support (1) in an articulated manner.

4. Mechanical component according to Claim 1, **characterized in that** the component is configured as a trailer coupling with a coupling hook.

5. Mechanical component according to one of Claims 1 to 4, **characterized in that** the hollow body (3b, 21a) is configured as a hollow cylinder or a hollow sphere with an inner surface.

6. Mechanical component according to one of Claims 1 to 5, **characterized in that** the hollow body (3b, 21a) has a closed cross section which is arranged in the force flow of the loading force.

7. Mechanical component according to either of Claims 5 and 6, **characterized in that** the at least one force sensor (7, 27) is arranged in the region of or on the inner surface of the hollow body (3b, 21a).

8. Mechanical component according to one of Claims 1 to 7, **characterized in that** the at least one force sensor (7, 27) is configured as a strain gauge or as a sensor element made from carbon nanotubes.

## Revendications

1. Pièce mécanique pour un véhicule, en particulier support formant barre ou support oscillant, bras de suspension ou joint à rotule, comprenant une zone de mesure dotée d'une surface et au moins un capteur de force, associé à la zone de mesure, servant à détecter une force sollicitant la pièce, la pièce (3, 21) comprenant un corps creux (3b, 21a) disposé dans la zone de mesure et doté d'une cavité (4, 24) dans laquelle ledit au moins un capteur (7, 27) peut être positionné, **caractérisée en ce que** le corps creux (3b, 21a) comprend au moins une interface (5, 25) avec une zone pleine de la pièce (3c, 21b), l'interface (5, 25) sur le corps creux (5, 25) formant une ouverture servant au montage du capteur de force (7, 27) et d'accessoires éventuels et le corps creux (3b, 21a) étant relié par liaison de matière à la pièce (3c, 21b) dans la zone de l'interface (5, 25), de sorte qu'une fermeture hermétique du capteur de force (7, 27) soit obtenue.

2. Pièce mécanique selon la revendication 1, **caractérisée en ce que** la pièce est réalisée sous forme de support oscillant (21) d'un train roulant.

3. Pièce mécanique selon la revendication 1, **caractérisée en ce que** la pièce est réalisée sous forme de joint à rotule (2) ou de tourillon à rotule (3), lequel est relié de manière articulée à un support oscillant (1).

4. Pièce mécanique selon la revendication 1, **caractérisée en ce que** la pièce est réalisée sous forme d'attelage de remorque comprenant un crochet d'attelage.

5. Pièce mécanique selon l'une quelconque des revendications 1 à 4, **caractérisée en ce que** le corps creux (3b, 21a) est réalisé sous forme de cylindre creux ou de sphère creuse comprenant une surface intérieure.

6. Pièce mécanique selon l'une quelconque des revendications 1 à 5, **caractérisée en ce que** le corps creux (3b, 21a) présente une section transversale fermée, laquelle est disposée dans le flux de force de la force de sollicitation.

7. Pièce mécanique selon l'une quelconque des revendications 5 et 6, **caractérisée en ce que** ledit au moins un capteur de force (7, 27) est disposé dans la zone du corps creux (3b, 21a) ou sur la surface intérieure de celui-ci.

8. Pièce mécanique selon l'une quelconque des revendications 1 à 7, **caractérisée en ce que** ledit au moins un capteur de force (7, 27) est réalisé sous forme de jauge extensométrique ou sous forme d'élément de détection constitué de nanotubes de carbone.
